Europäisches Patentamt

**European Patent Office**

Office européen des brevets

(11) Publication number: **0 153 662**
**B1**

## EUROPEAN PATENT SPECIFICATION

(45) Date of publication of patent specification: **25.05.88**

(21) Application number: **85101580.0**

(22) Date of filing: **13.02.85**

(51) Int. Cl.⁴: **F 16 C 19/10,** A 47 B 49/00

(54) **Rotary support device.**

(30) Priority: **23.02.84 JP 26138/84 u**
**29.06.84 JP 99184/84 u**

(43) Date of publication of application:
**04.09.85 Bulletin 85/36**

(45) Publication of the grant of the patent:
**25.05.88 Bulletin 88/21**

(84) Designated Contracting States:
**DE FR GB SE**

(56) References cited:
**FR-A-1 316 280**
**FR-A-1 502 893**
**FR-A-2 494 359**
**GB-A- 467 624**

(73) Proprietor: **OSAKA TAIYU COMPANY, LTD.**
**10-1, Ina 6-chome**
**Minoo-shi Osaka (JP)**

(72) Inventor: **Tabayashi, Yoshikazu**
**B11-505, 1, Takemidai 4-chome**
**Suita-shi Osaka (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

# Description

Devices for rotatably supporting articles have heretofore been proposed which comprise a base plate formed with an annular recessed portion and steel balls arranged on the recessed portion at a specified pitch so that the article can be rotatably supported by the steel balls, as disclosed in British Patent No. 1,231,388 and Swiss Patent No. 159,371. However, these devices, in which the article and the base plate are united, have the problem of being unsuited to universal use.

Accordingly the present applicant has already proposed a rotating apparatus which is universally usable and shown in Fig. 12. The apparatus is disclosed in detail in the specification of U.S. Patent No. 4,433,954.

With reference to Fig. 12, the rotating apparatus comprises an under ring 81 serving as an under member, a plurality of roller bearings 8 mounted on the under ring 81 in vertical and horizontal positions, an upper ring 80 supported by the bearings and serving as an upper member, and a retaining member 82 for holding the two rings together. The apparatus is annular in its entirety and can be transported by rolling. Moreover, when a pallet is placed on the upper ring 80, a heavy article such as a drum can be rotatably supported by the apparatus. However, the apparatus, which includes the plurality of roller bearings, has a problem in respect of cost because the bearings and the retaining member 82 must be fixed to the rings by an expensive manual procedure.

The document GB—A—467 624 discloses a rotary support device of the type described in the first part of claim 1. This device for universal use has upper and under rings with steel balls interposed therebetween. The outer peripheries of both rings are bent toward each other to form overlapping outer walls. The outer walls are inclined in such a manner that their extremities form radially overlapping retaining portions, so that the upper and under rings are inseparably held together by engagement of the retaining portions. The inner periphery of the under ring is bent upwardly to form an inner wall, while the inner periphery of the upper ring is extended straight inwardly, so that no overlap is provided at the inner periphery. The steel balls are guided by the inner and outer walls of the under ring.

The document FR—A—2 494 395 discloses a retainer for rotatably holding the steel balls of a rotary device. This retainer is formed by a strip made of synthetic resin and provided with openings for receiving the steel balls. The strip is bent into a cylindrical configuration, and the opposite end of the strip are detachably coupled to each other. As the steel balls project radially inwardly and outwardly from the cylindrical structure, this retainer cannot be applied to a rotary support device of the type mentioned above, in which the steel balls support the upper ring. Furthermore, the size of the conventional retainer cannot be adapted to rotary support devices of different dimensions, so that the production costs are relatively high.

## Summary of the invention

The present invention as defined in claim 1 provides a rotary support device which has a retainer for rotatably holding the steel balls in definite positions in such a manner, that they can support the upper ring against high axial load, and which can be produced at low costs.

The upper and under rings of the rotary support device according to the invention have overlapping inner and outer vertical peripheral walls, and the inner and/or outer peripheral walls are bent to from the retaining portions. The steel balls are held equidistantly spaced apart by a retainer accommodated in the space between the inner and outer peripheral walls. The retainer consists of a plurality of segments being separatably connected to each other, so that the retainer can be adapted to different diameters of the rotary support device.

## Brief description of the drawings

Fig. 1 is a perspective view partly broken away and showing a rotary support device;

Fig. 2 is an enlarged sectional view of Fig. 1;

Fig. 3 is a perspective view showing steel plates before press work;

Fig. 4 is an enlarged sectional view showing an upper ring and under ring before fitting;

Fig. 5 is a diagram illustrating how to form retaining portions;

Fig. 6 is a perspective view showing a retainer;

Fig. 7 is a plan view showing an engaging piece of the retainer;

Fig. 8 is a plan view showing a socket piece of the retainer;

Fig. 9 is a plan view showing a retainer connecting portion having protrusions;

Fig. 10 is a sectional view showing a rotary support device having a flange on an under ring;

Fig. 11 is an enlarged sectional view showing another embodiment;

Fig. 12 is a sectional view showing a known rotating apparatus already proposed by the present inventor.

## Detailed description of the invention

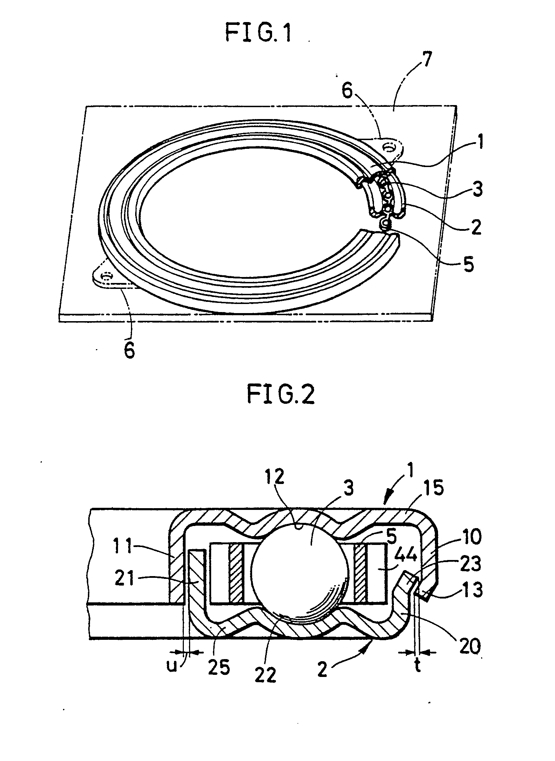

Fig. 1 shows a rotary support device of the present invention supporting a table 7 for placing an article thereon.

A plurality of steel balls 3 are arranged at a definite spacing between an upper ring 1 and an under ring 2 which serve as an annular upper member and an annular under member, respectively. Interposed between the two rings is a retainer 5 for rollably holding these steel balls 3 at a definite position relative to the retainer. The two rings 1, 2 comprise annular horizontal walls 15, 25 formed with annular recessed portions 12, 22 for guiding the rolling movement of the steel balls 3, and vertical inner peripheral walls 11, 21 and vertical outer peripheral walls 10, 20 respectively bent at the inner and outer peripheries of the horizontal walls and each extending toward the opposed ring. The inner peripheral walls 11, 21, as well as the outer peripheral walls 10, 20, of the two rings 1, 2 overlap each other with a small clearance formed therebetween. Each of the inner peripheral walls 11, 21 and/or the outer peripheral walls 10, 20 is bent at its edge portion toward the other opposed lapping peripheral wall in a direction to engage therewith to thereby form a pair of annular retaining portions 13, 23 which radially overlap each other by a small dimension t.

According to the present embodiment, each of the upper ring 1 and the under ring 2 is formed by blanking out a ring from a cold-rolled steel sheet having a thickness of 2.3 mm and pressing the blank. The device as assembled is 499 mm in outside diameter, 359 mm in inside diameter and about 20 mm in thickness. Forty-five steel balls 3, about 15.9 mm in diameter, are arranged at a pitch of about 28.2 mm and held by the retainer 5 in position relative to the retainer.

The vertical inner peripheral walls 11, 21 of the rings 1, 2 overlap each other as spaced apart by a clearance u of about 0.9 to 1.3 mm radially of the rings. The vertical outer peripheral walls 10, 20 are bent toward each other at a position 5 mm away from their extremities to overlap each other by the dimension t of about 1.4 to 2.0 mm radially of the rings.

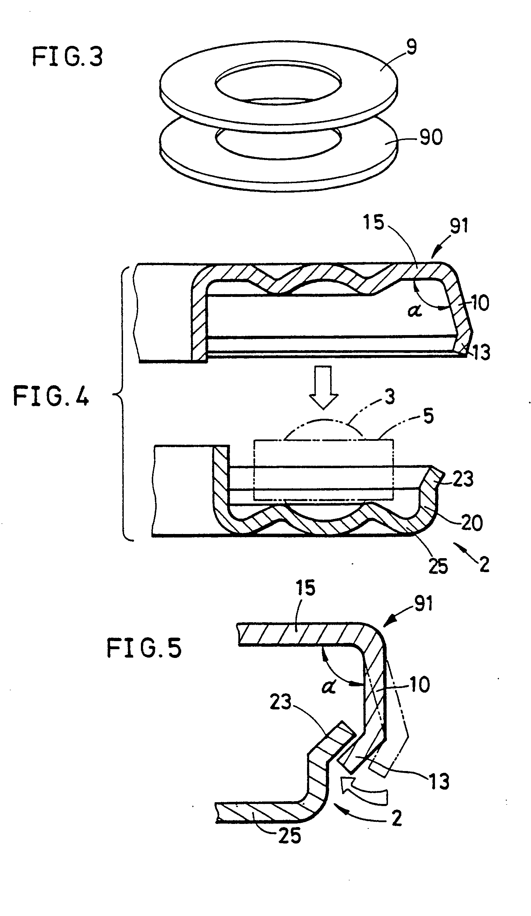

As seen in Fig. 3, the under ring 2 is prepared from a steel plate 90 blanked out in an annular form, by a single pressing process. To prepare the upper ring 1, on the other hand, a steel plate 9 blanked out in an annular form is subjected to a first pressing process to obtain a semi-finished ring 91 in which the horizontal wall 15 and the vertical outer peripheral wall 10 form an angle a of about 92 to 95 degrees as seen in Fig. 4. Subsequently the retainer 5 and steel balls 3 are arranged on the under ring 2, and the semi-finished upper ring 91 is placed over the resulting assembly as shown in Fig. 4. Since the retaining portion 13 of the semi-finished ring 91 has a larger diameter than the retaining portion 23 of the under ring 2, the semi-finished upper ring 91 is fittable over the under ring 2. The vertical outer peripheral wall 10 of the semi-finished ring 91 is then subjected over the entire circumference thereof to a second pressing process for plastic working to engage the retaining portions 13, 23 of the two rings with each other by reducing the angle a between the outer peripheral wall 10 and the horizontal wall 15 to about 90 as shown in Fig. 5, whereby the finished product of Fig. 2 is obtained.

Accordingly the upper ring 1 and the under ring 2 are freely rotatable relative to each other as supported by the steel balls, with a clearance u formed between their inner peripheral walls. However, since the retaining portions 13, 23 overlap each other radially of the rings over the entire circumference thereof, the two rings are prevented from separation by the retaining portions coming into contact with each other even when a separating force acts on the rings.

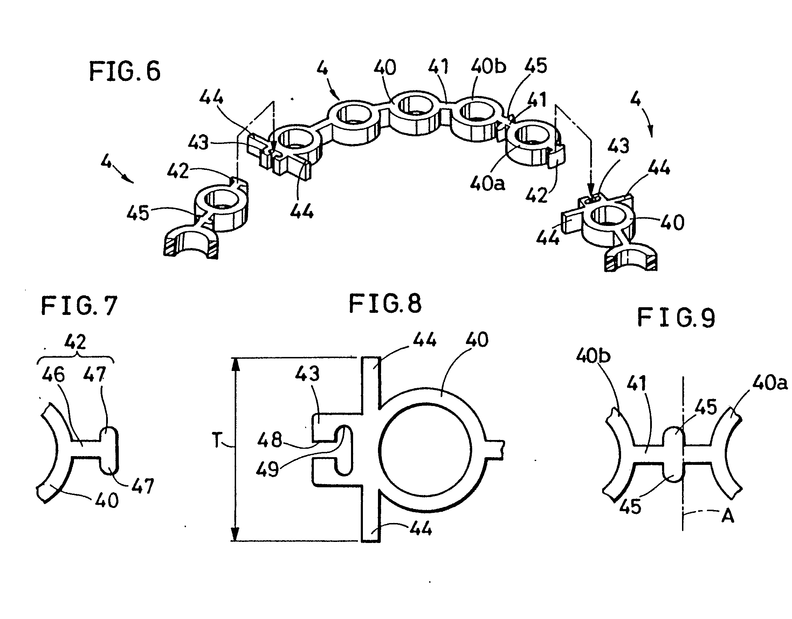

The retainer 5 comprises a plurality of retainer segments 4 connected to one another into a ring as seen in Fig. 6.

The retainer segment 4 is integrally molded of a synthetic resin and comprises a plurality of hollow cylindrical holding portions 40 arranged on a plane and interconnected in a row by flexible thin connecting portions 41. An engaging piece 42 and a socket piece 43 engageable with each other are provided at opposite ends of the segment 4 as shown in Fig. 6.

With reference to Fig. 7, the engaging piece 42 includes a thin plate-like stem 46 having the same thickness as the connecting portion 41 and protrusions 47 which are circular arc in section and provided on opposite sides of the forward end of the stem 46.

Fig. 8 shows that the socket piece 43 has a first socket 48 for the stem 46 of the engaging piece 42 to fit in and an enlarged second socket 49 for the protrusions 47 to fit in.

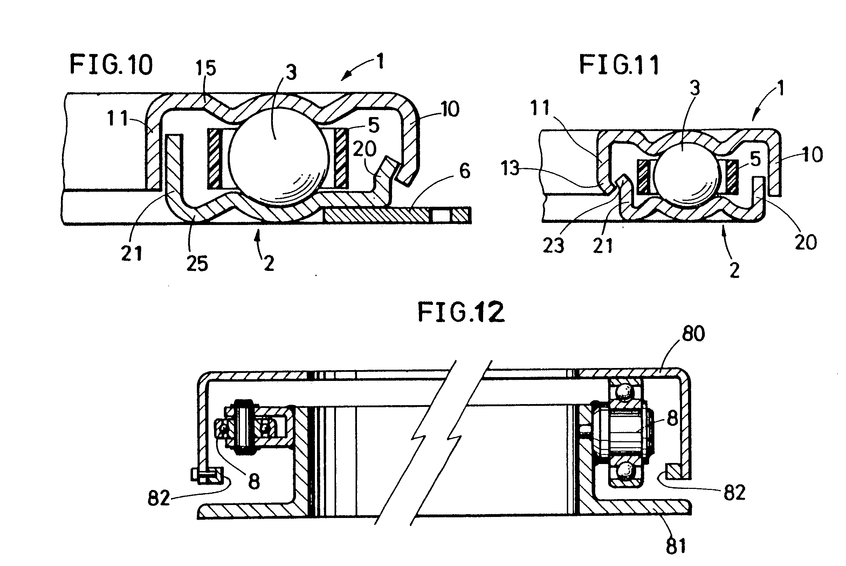

As seen in Fig. 9, the connecting portion 41 between a first holding portion 40a provided with the engaging piece 42 and a second holding portion 40b subsequent to the portion 40a is formed with protrusions 45 on its opposite sides. When the connecting portion 41 is cut along the broken line A shown, the remaining portion on the second holding portion 40b can be made to have the same shape as the engaging piece 42.

With reference to Figs. 6 and 8, a pair of projections 44, 44 in the form of a thin plate extends from the base end of the socket piece 43 at right angles with the direction of arrangement of the holding portions 40. The end-to-end overall length T of the projections 44, 44 is slightly smaller than the distance between the inner surfaces of the under ring 2 shown in Fig. 2.

As shown in Fig. 6, the retainer segment 4 is arcuate in its entirety. Moreover, since the connecting portions 41 are made of a synthetic resin, the retainer segment 4 is further deformable. Accordingly the retainer 5 is formed by connecting a plurality of retainer segments 4 into a single elongated assembly by the engagement of engaging pieces 42 with socket pieces 43 and engaging the ends of the assembly with each other into a ring. The retainer 5 is interposed between the under ring 2 and the upper ring 1 and rollably holds the steel balls 3 at an equal spacing.

The diameter of the retainer 5 is adjustable in accordance with the sizes of the under ring 2 and the upper ring 1 by cutting the connecting portion 41 having the protrusions 45 and included in the retainer segment 4 and using the protrusions for engagement.

When the retainer 5 is provided between the under ring 2 and the upper ring 1, the projections 44, 44 formed at one end of each retainer segment 4 are opposed to the vertical inner peripheral wall 21 and the outer peripheral wall 20 of the under ring 2 in contact therewith or as spaced apart therefrom by a small clearance as shown in Fig. 2, whereby the retainer 5 interposed between the rings is prevented from displacement. Accordingly even when impact acts on the rotary support device radially of the rings for example when the device is carried around, the retainer 5 reliably holds the steel balls 3 arranged concentrically with the rings without permitting them to deviate from the circular raceways formed on the rings.

A table 7 is placed on the rotary support device as shown in Fig. 1. When a torque acts on the table 7, the upper ring 1 rotates smoothly relative to the under ring 2 owing to the rolling movement of the steel balls 3. Even if the load is applied to the upper ring 1 in a somewhat inclined direction relative to the centre of rotation of the ring, the rings will not be displaced since the steel balls 3 are restrained by the annular recessed portions 12, 22 of the rings.

With the rotary support device, the retaining portions can be easily formed by press work at the edges of the upper ring and the under ring. This reduces the number of components and renders the device easy and inexpensive to make. Moreover, the device is annular in its entirety and is therefore convenient to carry around.

The retainer 5 can be formed from a synthetic resin easily, for example, by injection molding and is accordingly inexpensive to make. The diameter of the retainer 5 as an assembly is easily adjustable by changing the number of retainer segments 4 or by cutting the connecting portion 41 having the protrusions 45. Thus, the retainer 5 is well suited to the present device.

Modifications of the invention

When required, outward or inward flanges 6 are attached to the upper ring 1 or the under ring 2 as seen in Figs. 1 and 10. In this case, the flange attaching portion of the ring is recessed by an amount corresponding to the thickness of the flange as shown in Fig. 10, so that the lower surface of the device has no stepped portion.

The retaining portions 13, 23, which are formed on the outer peripheral walls 10, 20 in the foregoing embodiment, may alternatively be formed on the inner peripheral walls 11, 21 as seen in Fig. 11.

According to the above embodiment, rings are blanked out from a steel sheet to obtain workpieces for press work, so that the disks blanked out for forming the central openings are unusable. However, the waste of steel sheet due to blanking can be reduced by blanking out sectors from a steel sheet, pressing the blanks and joining the pressed blanks into a ring by welding.

The raceways for the steel balls can be given improved resistance to abrasion and fatigue by subjecting the upper ring and the under ring to tufftriding treatment or plating the rings with hard chromium.

Although the engaging piece 42 and the socket piece 43 of the retainer segment 4 have the first protrusions 47 and the socket 49, respectively, for preventing slipping off, the engaging portions may be made separable in the direction of connecting retainer segments and bonded together with an adhesive when required for assembly, instead of forming the protrusions and socket. In this case, the second protrusions 45 need not be provided on the connecting portion 41.

The projections 44 of the retainer segment 4 need not always be formed on the socket piece 43 but can of course be provided on the holding portion 40 or the connecting portion 41.

Although the projections 44 are not always necessary, it is desirable to provide these projections to assure more reliable operation of the device.

Furthermore, when there is no need to adjust the diameter of the retainer, the second protrusions 45 need not be formed on the retainer segment 4, while the retainer can be molded as an integral piece in its entirety.

Because the retainer segment 4 is deformable at the connecting portions 41, it is not always necessary to form the segment in an arcuate shape in its entirety.

The under ring 2 and the upper ring 1 are not always in a fixed upper-lower relationship; the upper ring 1 of the rotary support device is of course usable as the under ring.

**Claims**

1. A rotary support device comprising an upper ring (1), an under ring (2) disposed below the upper ring, and steel balls (3) interposed between the upper and under rings, the upper ring being supported by the under ring rotatably relative thereto, each of the upper and under rings (1, 2) having a vertical outer peripheral wall (10, 20), and the under ring having also a vertical inner peripheral wall (21), the outer peripheral walls (10, 20) overlapping each other with a small clearance formed therebetween, said upper and under rings being inseparably held together by means of respective annular retaining portions (13, 23) radially overlapping each other by a small dimension, characterized in that
— the upper ring (1) has a vertical inner wall (11) at its inner periphery being bent downwardly toward the vertical inner peripheral wall (21) of the under ring (2), the inner peripheral walls (11, 21) overlapping each other with a small clearance formed therebetween,
— each of the outer peripheral walls (10, 20) or each of the inner peripheral walls (11, 21) is bent toward the other opposed overlapping peripheral wall to form said annular retaining portions (13, 23),
— the steel balls (3) are rotatably held spaced apart approximately equidistantly as fitted in a retainer (5),
— and in that the retainer (5) comprises a plurality of retainer segments (4) connected to one another into a ring, each of the retainer segments (4) being integrally molded from a synthetic resin and comprising a plurality of hollow cylindrical holding portions (40) with open-ended faces arranged on a plane, flexible connecting portions (41) interposed between the holding portions and interconnecting the holding portions in a row, an engaging piece (42) projecting from the holding portion at one end of the row, and a socket piece (43) provided on the holding portion at the other end of the row for the engaging piece to fit in.

2. A rotary support device as defined in claim 1, characterized in that the engaging piece (42) has an enlarged forward end and the socket piece (43) is formed with a correspondingly shaped socket (48, 49) for the engaging piece (42) to fit in.

3. A rotary support device as defined in claim 1, characterized in that the retainer segment (4) is provided on at least one of its inner and outer opposite sides with a projection (44) having a free end projecting outward from the retainers segment (4).

4. A rotary support device as defined in claim 1, characterized in that the engaging piece (42) has a stem (46) projecting from the holding portion (40a) arranged at one end of the row, the stem having the same shape as the connecting portion (41) and being provided with a protrusion (47) on each side of its forward end, the connecting portion (41) between the end holding portion (40a) and another holding portion (40b) adjacent thereto being provided on each side thereof with a second protrusion (45) having the same shape as the first protrusion (47).

**Patentansprüche**

1. Drehbare Trägervorrichtung mit einem oberen Ring (1), einem unter dem oberen Ring angeordneten unteren Ring (2) und zwischen den oberen und unteren Ringen eingefügten Stahlkugeln (3) bei der der obere Ring derart durch den unteren Ring abgestützt ist, daß er relativ zu letzterem drehbar ist, jeder der oberen und unteren Ringe (1, 2) eine vertikale äußere Umfangswand (10, 20) und der untere Ring außerdem eine vertikale innere Umfangswand (21) aufweist, die äußeren Umfangswände (10, 20) einander unter Bildung eines kleines Zwischenraums zwischen ihnen überlappen und die oberen und unteren Ringe untrennbar zusammengehalten werden mit Hilfe jeweiliger ringförmiger Halteabschnitte (13, 23), die einander radial um einen geringen Betrag überlappen, dadurch gekennzeichnet, daß

— der obere Ring (1) an seinem inneren Rand eine abwärts in Richtung auf die vertikale innere Umfangswang (21) des unteren Rings (2) gebogene vertikale innere Umfangswand (11) aufweist und die vertikalen inneren Umfangswände (11, 21) einander unter Bildung eines kleinen Zwischenraums zwischen ihnen überlappen,

— jede der äußeren Umfangswände (10, 20) oder jede der inneren Umfangswände (11, 21) zur Bildung der ringförmigen Halteabschnitte (13, 23) in Richtung auf die gegenüberliegende, überlappende andere Umfangswand abgebogen ist,

— die Stahlkugeln (3) in einen Halter (5) eingesetzt und dadurch drehbar in im wesentlichen gleichmäßigen Abständen gehalten sind,

— une daß der Halter (5) mehrere zu einem Ring miteinander verbundene Halter-Segmente (4) aufweist, von denen jedes einstückig aus Kunststoff geformt ist und mehrere in einer Ebene angeordnete hohlzylindrische, an den Stirnflächen offene Halteabschnitte (40), zwischen den Halteabschnitten eingefügte und diese in Reihe miteinander verbindende flexible Verbindungsabschnitte (41), ein von dem Halteabschnitt an einem Ende der Reihe vorspringendes Eingriffsteil (42) und ein an dem Halteabschnitt am anderen Ende der Reihe angeordnetes Aufnahmeteil (43) zur Aufnahme des Eingriffsteils aufweist.

2. Drehbare Trägervorrichtung nach Anspruch 1, dadurch gekennzeichnet, daß das Eingriffsteil (42) ein vergrößertes freies Ende und das Aufnahmeteil (43) einen entsprechend geformten Sitz (48, 49) zur Aufnahme des Eingriffsteils aufweist.

3. Drehbare Trägervorrichtung nach Anspruch 1, dadurch gekennzeichnet, daß das Halter-Segment (4) an wenigstens einer seiner entgegengesetzten inneren und äußeren Seiten einen Vorsprung (44) mit einem nach außen von dem Halter-Segment vorspringenden freien Ende aufweist.

4. Drehbare Trägervorrichtung nach Anspruch 1, dadurch gekennzeichnet, daß das Eingriffsteil (42) einen Steg (46) aufweist, der von dem an einem Ende der Reihe angeordneten Halteabschnitt (40a) vorspringt, die gleiche Form wie der Verbindungsabschnitt (41) aufweist und auf jeder Seite seines freien Endes mit einem Ansatz (47) versehen ist, und daß der Verbindungsabschnitt (41) zwischen dem am Ende der Reihe befindlichen Halteabschnitt (40a) und dem daran angrenzenden Halteabschnitt (40b) auf jeder Seite mit einem zweiten Ansatz (45) versehen ist, der die gleiche Form wie der erste Ansatz (47) aufweist.

**Revendications**

1. Dispositif rotatif de support comprenant une bague supérieure (1), une bague inférieure (2) disposée en-dessous de la bague supérieure, et des billes d'acier (3) interposées entre les bagues supérieure et inférieure, la bague supérieure étant supportée par la bague inférieure de façon à pouvoir tourner par rapport à cette dernière, chacune des bagues supérieure et inférieure (1, 2) ayant une paroi périphérique extérieure verticale (10, 20), et la bague inférieure ayant également une paroi périphérique intérieure verticale (21), les parois périphériques extérieures (10, 20) se chevauchant l'une l'autre, avec un petit espace libre formé entre elles, lesdites bagues supérieure et inférieure étant maintenues ensemble de façon inséparable au moyen de parties respectives annulaires (13, 23) de retenue se chevauchant radialement l'une l'autre sur une petite distance, caractérisé par le fait que:

— la bague supérieure (1) a à sa périphérie intérieure une paroi intérieure verticale (11) qui est coudée vers le bas, en direction de la paroi périphérique intérieure verticale (21) de la bague inférieure (2), les parois périphériques intérieures (11, 21) se chevauchant l'une l'autre, avec un petit espace formé entre elles;

— chaqune des parois périphériques extérieures (10, 20) ou chaqune des parois périphériques intérieures (11, 21) est coudée en direction de l'autre paroi périphérique opposée, ces deux parois se chevauchant l'une l'autre pour former lesdites parties annulaires (13, 23) de retenue;

— les billes d'acier (3) sont maintenues de façon à pouvoir rouler tout en étant séparées les unes des autres de façon approximativement équidistante et logées dans une cage (5);

— et que la cage (5) comprend une pluralité de segments (4) connectés l'un à l'autre en un anneau, chacun des segments (4) de cage étant moulé d'une seule pièce en résine synthétique et comprenant une pluralité de parties cylindriques creuses (40) de maintien à faces d'extrémités ouvertes disposées dans un plan, des parties flexibles (41) de connexion interposées entre les parties de maintien et reliant les parties de maintien en une succession de parties, une pièce (42) d'emboîtement faisant saillie de la partie de maintien à une extrémité de la chaîne, et une pièce (43) en forme de cavité, pratiquée dans la partie de maintien à l'autre extrémité de la chaîne, pour que s'y encastre la pièce d'emboîtement.

2. Dispositif rotatif de support selon la revendication 1, caractérisé par le fait que la pièce (42) d'emboîtement a une extrémité avant agrandie, et que la pièce (43) en forme de cavité est formée avec une cavité (48, 49) dont le profil correspond à la pièce d'emboîtement pour que celle-ci s'y encastre.

3. Dispositif rotatif de support selon la revendication 1, caractérisé par le fait que le segment (4) de cage est pourvu sur au moins un de ses côtés opposés intérieur et extérieur d'une partie en saillie (44) ayant une extrémité libre s'étendant vers l'extérieur depuis le segment (4) de bague.

4. Dispositif rotatif de support selon la revendication 1, caractérisé par le fait que la pièce (42) d'emboîtement a une queue (46) s'étendant depuis la partie (40a) de maintien disposée à une extrémité de la succession de parties, la queue ayant la même forme que la partie (41) de connexion et étant pourvue d'une protubérance (47) de chaque côté de son extrémité avant, la partie (41) de connexion entre la partie (40a) de maintien d'extrémité et une autre partie (40b) de maintien qui lui est adjacente étant pourvue sur chacun de ses côtés d'une seconde protubérance (45) ayant la même forme que la première protubérance (47).

FIG.1

FIG.2

0 153 662

FIG.3

FIG.4

FIG.5

2

FIG.6

FIG.7

FIG.8

FIG.9

0 153 662

# FIG.10

# FIG.11

# FIG.12

0 153 662